# EUROPEAN PATENT APPLICATION

(11) **EP 4 778 828 A1**
(43) Date of publication of application: **22.07.2026**
(21) Application number: 25221802.9
(22) Date of filing: 09.12.2025
(51) Int. Cl.: B63H 20/12, B63H 20/14, B63H 20/32, B63H 21/17, H02K 5/132, B63H 25/42

(54) **OUTBOARD MOTOR**

(30) Priority: 21.01.2025 JP 2025008306
(71) Applicant: Yamaha Hatsudoki Kabushiki Kaisha, Iwata-shi, Shizuoka 438-8501 (JP)
(72) Inventor: Nogami, Tatsuhiko, Iwata-shi, Shizuoka, 4388501 (JP); Kawanishi, Masaru, Iwata-shi, Shizuoka, 4388501 (JP)
(74) Representative: Grünecker Patent- und Rechtsanwälte PartG mbB

(57) **Abstract**

An outboard motor comprises a steering shaft, a base, a cowl, a drive unit, a winding member, and an electric cable. The base rotatably supports the steering shaft. The drive unit includes a propeller and an electric motor. The drive unit is rotatable together with the steering shaft. The winding member is connected to the steering shaft. The winding member is rotatable together with the steering shaft. The winding member includes a winding shaft that extends in the axial direction of the steering shaft. The electric cable is connected to the electric motor. The electric cable extends from the electric motor to inside the cowl. The electric cable is wound around the winding shaft.

## Description

The present invention relates to an outboard motor.

There are outboard motors in which the electric motor is steered together with the propeller. For example, in the outboard motor disclosed in JP 2022-018647 A. The lower housing is disposed below the cowl and the upper housing. The electric motor and the propeller are provided in the lower housing. The lower housing and the upper housing are connected to the steering shaft. The lower housing and the upper housing rotate around the steering shaft. The electric cable is connected to the electric motor. The electric cable extends through the cowl from the electric motor.

In the above outboard motor, the electric motor rotates relative to the cowl. If the electric cable is greatly twisted due to the rotation of the electric motor, the electric cable becomes prone to damage. Therefore, in the above outboard motor, the electric cable is disposed inside the cowl in a largely S-shaped slackened state. As a result, the electric cable twisting is reduced during the rotation of the electric motor.

However, when the electric cable is disposed as described above, it is necessary to secure a large movable area for the electric cable inside the cowl. Therefore, the cowl becomes larger in size. Alternatively, the layout constraints for other components inside the cowl increase. It is the object of the present invention to provide an outboard motor that is able to compactly arrange the electric cables inside the cowl while suppressing damage to the electric cables during the rotation of the electric motor. According to the present invention said object is solved by an outboard motor having the features of independent claim 1. Preferred embodiments are laid down in the dependent claims.

Accordingly, an outboard motor includes a steering shaft, a base, a cowl, a drive unit, a winding member, and an electric cable. The base rotatably supports the steering shaft. The cowl covers the base. The drive unit includes a propeller and an electric motor. The electric motor drives the propeller. The drive unit is rotatable together with the steering shaft. The winding member is disposed inside the cowl. The winding member is connected to the steering shaft. The winding member is rotatable together with the steering shaft. The winding member includes a winding shaft extending in the axial direction of the steering shaft. The electric cable is connected to the electric motor. The electric cable extends from the electric motor into the cowl. The electric cable is wound around the winding shaft.

In the outboard motor according to the present aspect, the electric cable is wound around the winding shaft. The winding shaft, by rotating together with the steering shaft, converts the twisting motion on the electric cable caused by the rotation of the electric motor into a bending motion. As a result, damage to the electric cable during the rotation of the electric motor is suppressed. Furthermore, the winding shaft extends in the axial direction of the steering shaft. Therefore, the electric cables are disposed compactly within the cowl.

### BRIEF DESCRIPTION OF THE DRAWINGS

FIG. 1 is a side view of an outboard motor according to an embodiment.
FIG. 2 is a rear view of the outboard motor.
FIG. 3 is a schematic diagram showing a configuration of a drive unit.
FIG. 4 is a perspective view showing a steered upper housing and the drive unit.
FIG. 5 is a top view showing a structure inside a cowl.
FIG. 6 is a perspective view of a winding member.
FIG. 7 is a perspective view of the winding member.
FIG. 8 is a top view of the winding member.
FIG. 9A is a top view of a winding member according to a modified example.
FIG. 9B is a side view of the winding member according to the modified example.
FIG. 10A is a top view of the winding member according to the modified example.
FIG. 10B is a side view of the winding member according to the modified example.
FIG. 11A is a top view of the winding member according to the modified example.
FIG. 11B is a side view of the winding member according to the modified example.

### DETAILED DESCRIPTION

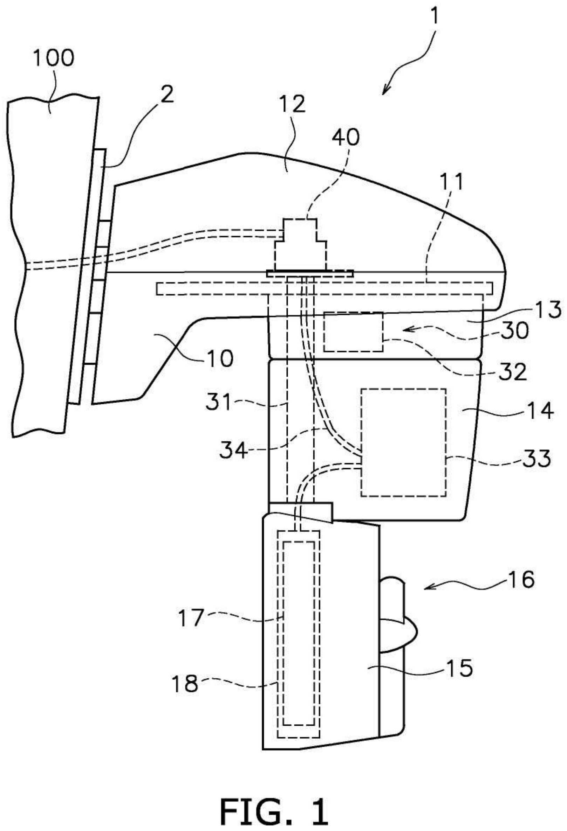

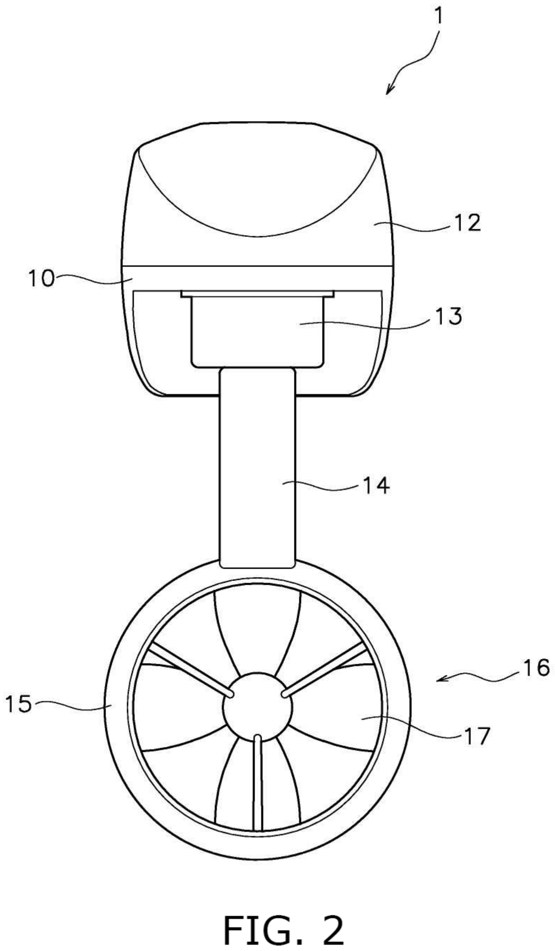

Next, an outboard motor according to an embodiment will be described with reference to the drawings. FIG. 1 is a side view of the outboard motor 1 according to the embodiment. FIG. 2 is a rear view of the outboard motor 1. As shown in FIG. 1, the outboard motor 1 is mounted on the stern of a marine vessel 100. The outboard motor 1 is attached to the marine vessel 100 via a bracket 2. The outboard motor 1 includes a first case 10, a base 11, a cowl 12, a second case 13, an upper housing 14, a lower housing 15, and a drive unit 16.

The first case 10 is attached to the base 11. The first case 10 covers the base 11. The base 11 is connected to the bracket 2. The cowl 12 is disposed above the base 11. The cowl 12 is attached to the base 11. The cowl 12 and the first case 10 cover the base 11. The second case 13 is disposed below the base 11. The second case 13 is connected to the base 11. The upper housing 14 is disposed below the second case 13. The lower housing 15 is disposed below the upper housing 14. The lower housing 15 is connected to the upper housing 14.

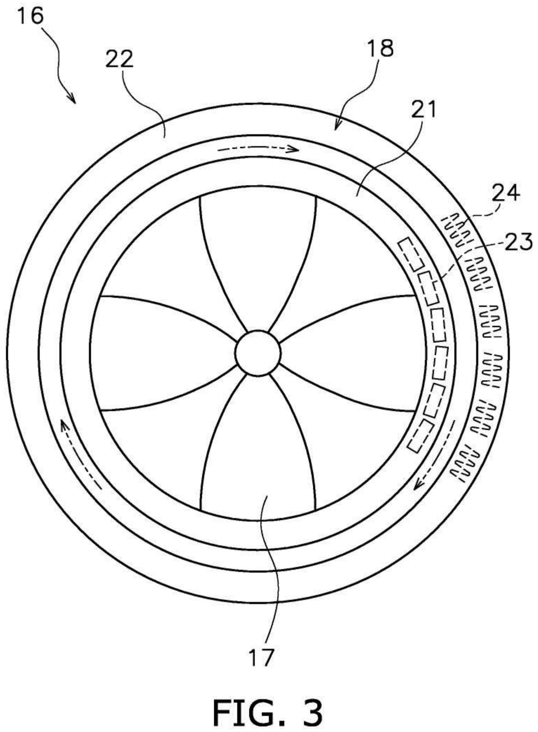

The drive unit 16 is disposed inside the lower housing 15. The drive unit 16 generates thrust to propel the marine vessel 100. FIG. 3 is a schematic diagram showing the configuration of the drive unit 16. As shown in FIG. 3, the drive unit 16 includes a propeller 17 and an electric motor 18. The electric motor 18 rotates the propeller 17. The outboard motor 1 generates thrust for the marine vessel 100 by rotating the propeller 17 with the electric motor 18.

The electric motor 18 includes a rotor 21 and a stator 22. The rotor 21 and the stator 22 each have a cylindrical shape. The rotor 21 is disposed radially inward of the stator 22. The rotor 21 is rotatably supported by the lower housing 15. The rotor 21 rotates relative to the stator 22. The propeller 17 is disposed radially inward of the rotor 21. The propeller 17 is fixed to the rotor 21. The propeller 17 rotates together with the rotor 21. The rotor 21 includes a plurality of permanent magnets 23. The plurality of permanent magnets 23 are disposed along the circumferential direction of the rotor 21. In FIG. 3, the reference numeral 23 is given to only one of the plurality of permanent magnets 23, and the reference numerals of the other permanent magnets 23 are omitted.

The stator 22 is disposed radially outward of the rotor 21. The stator 22 is fixed to the lower housing 15. The stator 22 includes a plurality of coils 24. The plurality of coils 24 are disposed along the circumferential direction of the stator 22. Electromagnetic force that rotates the rotor 21 is generated when current is supplied to the plurality of coils 24. In FIG. 3, the reference number 24 is given to only one of the plurality of coils 24, and the reference numerals for the other coils 24 are omitted.

As shown in FIG. 1, the outboard motor 1 includes a steering mechanism 30. The steering mechanism 30 is disposed inside the second case 13. The steering mechanism 30 includes a steering shaft 31 and a steering motor 32. The steering shaft 31 extends in the vertical direction of the outboard motor 1. The steering shaft 31 is rotatably supported by the base 11.

The steering mechanism 30 rotates the drive unit 16 around the steering shaft 31. As a result, the marine vessel 100 is steered. The steering motor 32 is connected to the steering shaft 31 via a transmission mechanism such as a gear, which is not illustrated. The steering motor 32 is an electric motor. The steering motor 32 rotates the steering shaft 31.

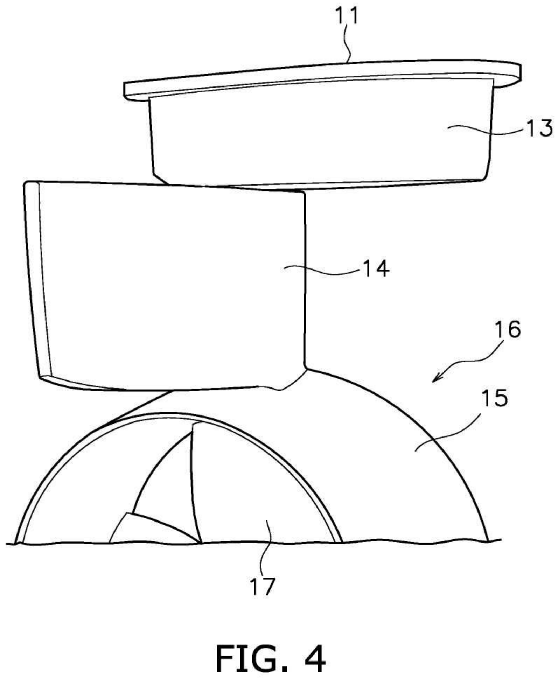

Specifically, the steering shaft 31 is connected to the upper housing 14. The upper housing 14 and the drive unit 16 are rotatable together with the steering shaft 31. As shown in FIG. 4, the upper housing 14 and the drive unit 16 are rotatable relative to the base 11 and the second case 13. When the steering motor 32 rotates the steering shaft 31, the upper housing 14 and the drive unit 16 rotate about the steering shaft 31 relative to the base 11 and the second case 13.

The outboard motor 1 includes the MCU 33 (motor control unit) and the electric cable 34. The MCU 33 is disposed within the upper housing 14. The electric cable 34 extends from the electric motor 18 through the MCU 33 toward the cowl 12. The electric cable 34 runs inside the cowl 12 and extends into the marine vessel 100. The electric cable 34 is connected to a battery disposed inside the marine vessel 100. The MCU 33 controls the power supplied from the battery to the electric motor 18.

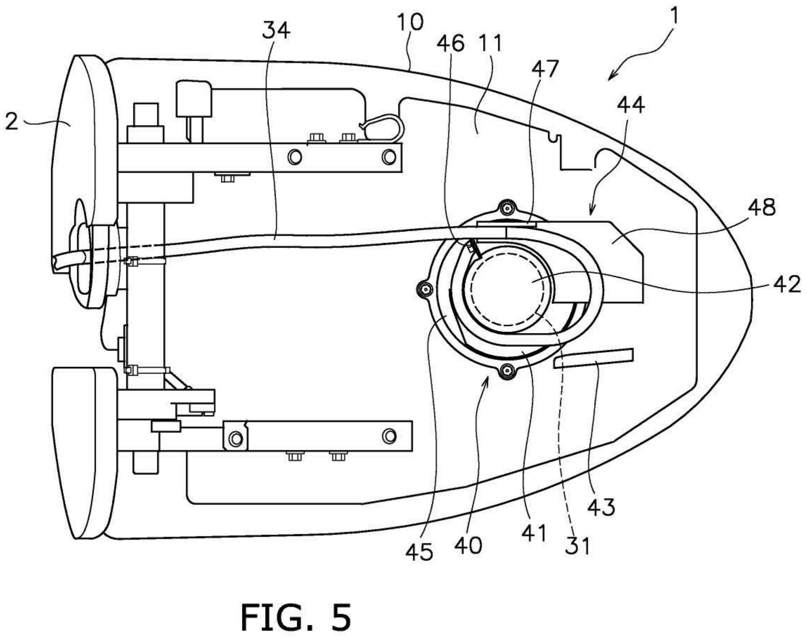

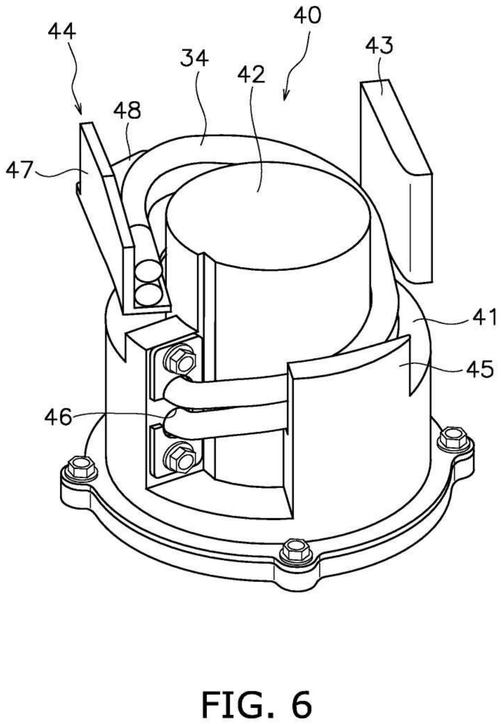

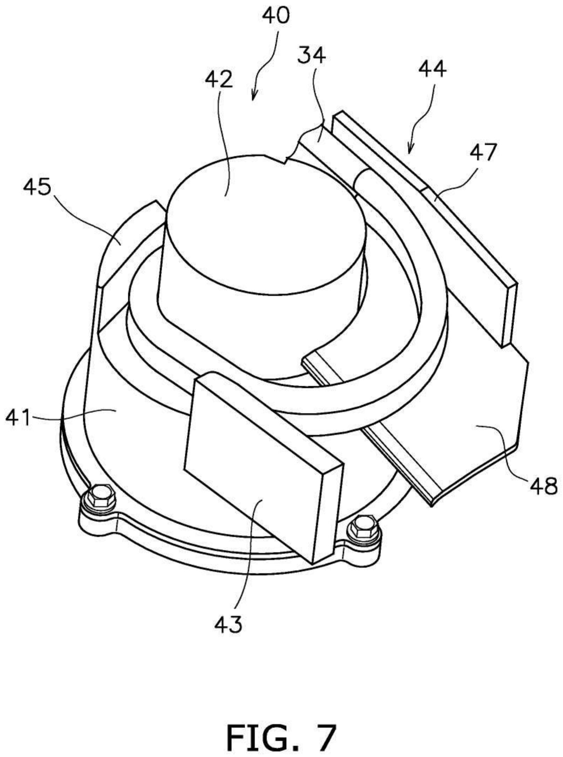

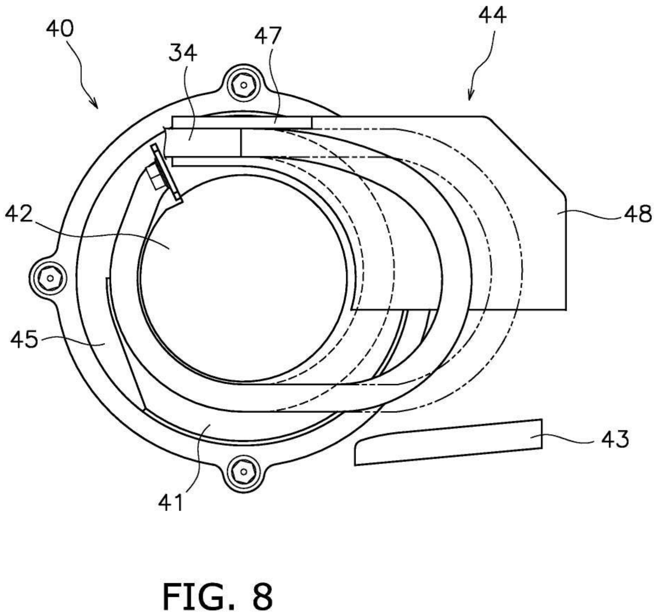

The outboard motor 1 includes a winding member 40. The winding member 40 is disposed inside the cowl 12. The winding member 40 is disposed above the base. The winding member 40 is connected to the steering shaft 31 and rotatable together with the steering shaft 31. FIG. 5 is a top plan view showing the structure inside the cowl 12. FIGS. 6 and 7 are perspective views of the winding member 40. FIG. 8 is a top plan view of the winding member 40.

As shown in FIGS. 5 to 8, the winding member 40 includes a base portion 41, a winding shaft 42, a first guide 43, a second guide 44, and a third guide 45. The base portion 41 is connected to the steering shaft 31. The winding shaft 42 extends upward from the base portion 41. The winding shaft 42 is integrally formed with the base portion 41. Alternatively, the winding shaft 42 may be a separate body from the base portion 41. The winding shaft 42 is disposed coaxially with the steering shaft 31. The winding shaft 42 extends in the axial direction of the steering shaft 31. The winding shaft 42 has a cylindrical shape.

As shown in FIG. 6, the base portion 41 includes a cable outlet 46. The cable outlet 46 is disposed radially outward the winding shaft 42. The cable outlet 46 opens toward the circumferential direction of the winding shaft 42. The cable outlet 46 opens forward of the outboard motor 1. The electric cable 34 is wound around the winding shaft 42 through the cable outlet 46. The electric cable 34 is wound spirally around the winding shaft 42.

As shown in FIG. 5, the electric cable 34 is wound around the winding shaft 42 with slack in the front-rear direction of the outboard motor 1. The electric cable 34 extends from the front of the winding shaft 42, through behind the winding shaft 42, to forward of the winding shaft 42. The electric cable 34 extends toward the interior of the marine vessel 100 through the bracket 2.

The first guide 43, the second guide 44, and the third guide 45 are disposed inside the cowl 12 facing the electric cable 34. The first guide 43 is disposed apart from the winding shaft 42 in the left-right direction of the outboard motor 1 when mounted on the stern of a marine vessel 100. The first guide 43 is disposed apart rearward from the winding shaft 42. The first guide 43 has a shape extending in the front-rear direction of the outboard motor 1 when mounted on the stern of a marine vessel 100. The first guide 43 is disposed on the left side (first side) of the portion of the electric cable 34 wound around the winding shaft 42. The first guide 43 is, for example, connected to the base 11.

The second guide 44 includes a side plate 47 and a bottom plate 48. The side plate 47 is disposed apart from the winding shaft 42 in the left-right direction. The side plate 47 has a shape extending in the front-rear direction (first direction). The side plate 47 is disposed on the right side (second side) of the portion of the electric cable 34 wound around the winding shaft 42. The bottom plate 48 is disposed below the portion of the electric cable 34 wound around the winding shaft 42. The electric cable 34 is disposed on the bottom plate 48. The second guide 44 is, for example, connected to the base 11.

The third guide 45 is disposed apart forward from the winding shaft 42. The third guide 45 has a shape extended in the left-right direction. The third guide 45 is disposed in front of the portion of the electric cable 34 wound around the winding shaft 42. The third guide 45 is connected to the base portion 41. The third guide 45 extends upward from the base portion 41.

When the drive unit 16 rotates together with the steering shaft 31, the winding shaft 42 also rotates together with the steering shaft 31. As a result, the slack in the electric cable 34 increases or decreases in the front-rear direction. For example, in FIG. 8, the electric cable 34 shown by the solid line indicates the amount of slack in the electric cable 34 when the steering angle of the drive unit 16 is 0 degrees, that is, when the propeller 17 is facing directly behind the outboard motor 1.

When the drive unit 16 is steered to one of the left and right, as shown by the dashed line in FIG. 8, the electric cable 34 is wound onto the winding shaft 42, reducing the slack in the electric cable 34 in the front-rear direction. When the drive unit 16 is steered to the other of the left and right, as shown in FIG. 8, the electric cable 34 is unwound from the winding shaft 42 as indicated by the two-dot chain line, causing the slack in the electric cable 34 to increase in the front-rear direction. The first to third guides 43 to 45 guide the movement of the electric cable 34 so that the slack in the electric cable 34 increases or decreases in the front-rear direction.

In the outboard motor 1 according to the embodiment described above, the electric cable 34 is wound around the winding shaft 42. The winding shaft 42 rotates together with the steering shaft 31, converting the twisting motion applied to the electric cable 34 by the rotation of the electric motor 18 into a bending motion. As a result, damage to the electric cable 34 during the rotation of the electric motor 18 is suppressed. Also, the winding shaft 42 extends in the axial direction of the steering shaft 31. Therefore, the electric cable 34 is disposed compactly inside the cowl 12.

Alternatively to the above embodiment, the MCU 33 is disposed inside the cowl 12. Alternatively to the above embodiment, the electric motor 18 is connected to the propeller 17 via a propeller shaft.

Alternatively to the above embodiment, the winding shaft 42 is disposed offset from the axis of the steering shaft 31 rather than being coaxial with the steering shaft 31.

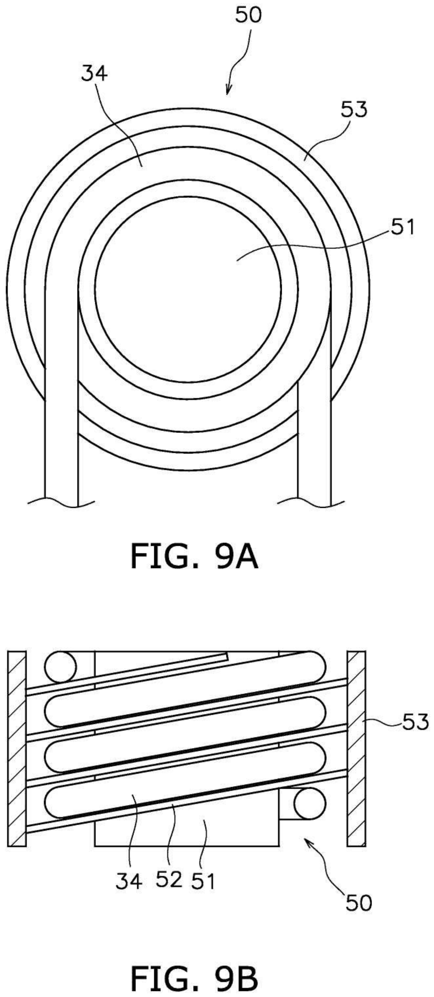

FIG. 9A is a top view of the winding member 50 according to a modified example. FIG. 9B is a side view of the winding member 50 according to the modified example. As shown in FIGS. 9A and 9B, the winding member 50 according to the modified example includes a winding shaft 51, a first guide 52, and a second guide 53. The first guide 52 is connected to the outer peripheral surface of the winding shaft 51. The first guide 52 extends helically on the outer peripheral surface of the winding shaft 51. The electric cable 34 is disposed between the first guides 52. The first guide 52 guides the electric cable 34 so that the electric cable 34 is wound helically along the outer peripheral surface of the winding shaft 51.

The second guide 53 is disposed facing the electric cable 34 in the radial direction of the winding shaft 51. The second guide 53 has a cylindrical shape. The second guide 53 surrounds the outer periphery of the winding shaft 51. The electric cable 34 is wound around the winding shaft 51 with slack in the radial direction of the winding shaft 51. The second guide 53 restricts the increase of slack in the electric cable 34 in the radial direction.

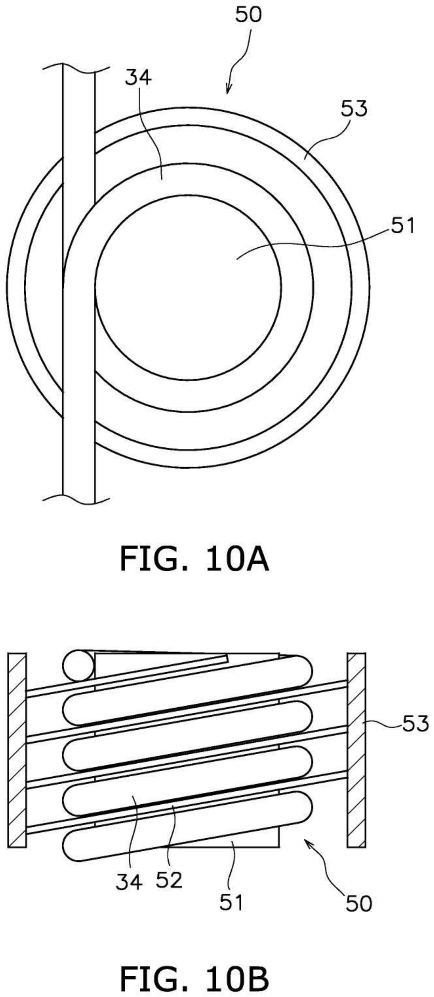

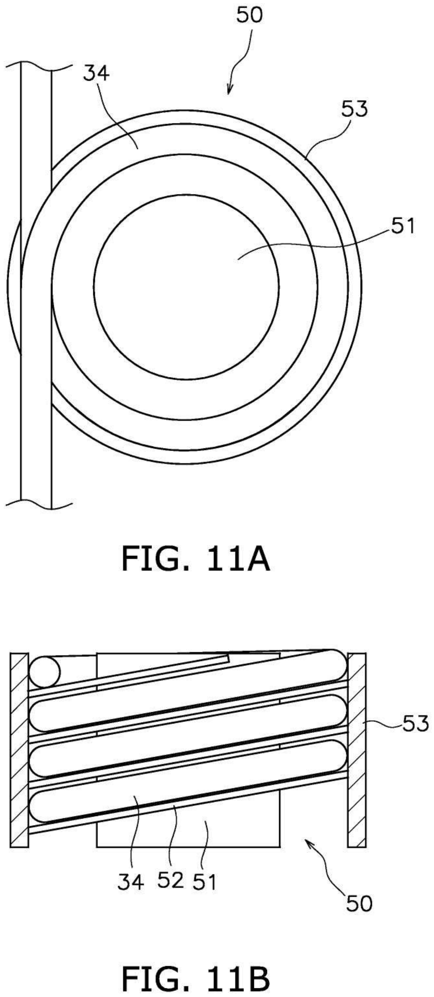

In the winding member 50 according to the modified example, the drive unit 16 rotates together with the steering shaft 31, causing the amount of slack in the electric cable 34 in the radial direction of the winding shaft 51 to increase and decrease. For example, in FIGS. 9A and 9B, the amount of slack in the electric cable 34 is shown when the steering angle of the drive unit 16 is 0 degrees, that is, when the propeller 17 is directed straight behind the outboard motor 1. When the drive unit 16 is steered to one of the left and right, as shown in FIGS. 10A and 10B, the slack in the electric cable 34 is reduced in the radial direction of the winding shaft 51 by winding the electric cable 34 onto the winding shaft 51. When the drive unit 16 is steered to the other of the left and right, as shown in FIGS. 11A and 11B, the electric cable 34 is unwound from the winding shaft 51, causing the slack of the electric cable 34 to increase radially of the winding shaft 51.

In the modified example described above, the winding shaft 51 rotates together with the steering shaft 31, converting the twisting motion of the electric cable 34 caused by the rotation of the electric motor 18 into a bending motion. As a result, damage to the electric cable 34 during the rotation of the electric motor 18 is suppressed. Moreover, the winding shaft 51 extends in the axial direction of the steering shaft 31. Therefore, the electric cable 34 is disposed compactly within the cowl 12.

### REFERENCE SIGNS LIST

1: Outboard motor, 11: Base, 12: Cowl, 16: Drive unit, 17: Propeller, 18: Electric motor, 31: Steering shaft, 34: Electric cable, 40: Winding member, 42: Winding shaft, 43: First guide, 44: Second guide, 46: Cable outlet, 50: Winding member, 51: Winding shaft, 52: First guide, 53: Second guide.

## Claims

1. An outboard motor (1) comprising:
a steering shaft (31);
a base (11) rotatably supporting the steering shaft (31);
a cowl (12) covering the base (11);
a drive unit (16) rotatable together with the steering shaft (31) and including a propeller (17) and an electric motor (18) configured to drive the propeller (17);
a winding member (40, 50) disposed inside the cowl (12), connected to the steering shaft (31), rotatable with the steering shaft (31), and including a winding shaft (42, 51) extending in an axial direction of the steering shaft (31); and
an electric cable (34) connected to the electric motor (18), extending into the cowl (12), and wound around the winding shaft (42, 51).

2. The outboard motor (1) according to claim 1, wherein the electric cable (34) is wound helically around the winding shaft (51).

3. The outboard motor (1) according to claim 1 or 2, further comprising at least one guide (43, 44, 45, 52, 53) disposed facing the electric cable (34) inside the cowl (12).

4. The outboard motor (1) according to claim 3, wherein the at least one guide comprises a guide (53) disposed facing the electric cable (34) in a radial direction of the winding shaft (51) inside the cowl (12).

5. The outboard motor (1) according to claim 3 or 4, wherein the at least one guide comprises a guide (43, 44, 52, 53) disposed laterally to a portion of the electric cable (34) wound around the winding shaft (42, 51).

6. The outboard motor (1) according to claim 5, wherein
the at least one guide (43, 44) includes
a first guide (43) disposed on a first side of the electric cable (34) inside the cowl (12) and
a second guide (44) disposed on a second side of the electric cable (34) inside the cowl (12).

7. The outboard motor (1) according to at least one of the claims 1 to 6, wherein the winding member (40) includes a cable outlet (46) disposed radially outward of the winding shaft (42), and
the electric cable (34) is wound around the winding shaft (42) through the cable outlet (46).

8. The outboard motor (1) according to claim 7, wherein the cable outlet (46) opens toward a circumferential direction of the winding shaft (42).

9. The outboard motor (1) according to claim 1 or 8, wherein the electric cable (34) is wound around the winding shaft (42, 51) with slack.

10. The outboard motor (1) according to claim 9, wherein the electric cable (34) is wound around the winding shaft (42, 51) so as to have the slack in a first direction.

11. The outboard motor (1) according to claim 10, wherein the electric cable (34) is wound around the winding shaft (42, 51) so as to have the slack in a in a front-rear direction of the outboard motor (1).

12. The outboard motor (1) according to claim 9, wherein the electric cable (34) is wound around the winding shaft (51) with the slack in a radial direction of the winding shaft (51).
